# EUROPEAN PATENT SPECIFICATION

(11) **EP 2 203 948 B1**
(45) Date of publication and mention of the grant of the patent: **28.12.2011**
(21) Application number: 08841781.1
(22) Date of filing: 23.10.2008
(51) Int. Cl.: H01M 4/58, C01B 25/45

(54) **POSITIVE ELECTRODE ACTIVE MATERIAL, LITHIUM SECONDARY BATTERY, AND MANUFACTURE METHODS THEREFORE**
POSITIVES AKTIVES ELEKTRODENMATERIAL, LITHIUMSEKUNDÄRBATTERIE UND HERSTELLUNGSVERFAHREN DAFÜR
MATÉRIAU ACTIF POUR ÉLECTRODE POSITIVE, BATTERIE SECONDAIRE AU LITHIUM ET PROCÉDÉS DE FABRICATION DE CEUX-CI

(30) Priority: 25.10.2007 JP 2007277275
(43) Date of publication of application: 07.07.2010
(73) Proprietor: Toyota Jidosha Kabushiki Kaisha, Toyota-shi, Aichi 471-8572 (JP)
(72) Inventor: YOSHIDA, Jun, Toyota-shi Aichi-ken 471-8571 (JP)
(74) Representative: TBK
(86) International application number: PCT/IB2008/002834
(87) International publication number: WO 2009/053823

(56) References cited:
- WO-A-97/40541
- CN-A- 1 684 290
- US-A- 4 710 439
- OUYANG CHU-YING ET AL: "First Principles Study on NaxLi1?xFePO4 As Cathode Material for Rechargeable Lithium Batteries" CHINESE PHYSICS LETTERS, vol. 23, no. 1, 1 January 2006 (2006-01-01), pages 61-64, XP002523424
- KISUK KANG ET AL: "Electrodes with High Power and High Capacity for Rechargeable Lithium Batteries" SCIENCE, vol. 311, no. 5763, 17 February 2006 (2006-02-17), pages 977-980, XP002523425

## Description

### BACKGROUND OF THE INVENTION

### 1. Field of the Invention

The invention relates to a positive electrode active material for use in a lithium secondary battery or the like. More particularly, the invention relates to a positive electrode active material having an olivine structure, a lithium secondary battery, and manufacture methods for the positive electrode active material and the lithium secondary battery.

### 2. Description of the Related Art

Along the trend of size reduction of personal computers, video cameras, cellular phones, etc., the field of information-related appliances and communication appliances is seeing the practical and wide-spread use of lithium secondary batteries as power sources used for these appliances for the reason that the lithium secondary batteries are high in energy density. Besides, in the field of motor vehicles, the development of electric motor vehicles is being hastened due to environmental issues and resource issues. A lithium secondary battery is considered also as a power source of the electric motor vehicles.

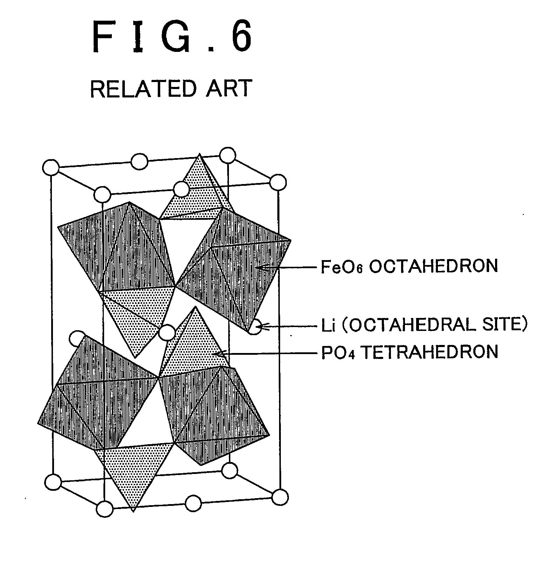

As a positive electrode active material for use in lithium secondary batteries, a compound having an olivine structure is generally known. The compounds having the olivine structure usually have a composition of XYZO₄ and, particularly, have a hexagonal closest packing structure of oxygen. Examples of the compounds having the olivine structure include LiFePO₄. In the crystal structure of LiFePO₄, as shown in FIG. 6, oxygen forms the hexagonal closest packing structure, and Li and Fe occupy 6-coordinate octahedrons, and P occupies 4-coordinate tetrahedrons.

Among the compounds having the olivine structure, materials having high discharge voltage, for example, LiCoPO₄ and the like, are known, and various developments thereof as materials that can be heightened in energy density are being advanced. For example, Japanese Patent Application Publication No. 9-134724 (JP-A-9-134724) discloses a nonaqueous electrolyte secondary battery that includes as a positive electrode active material a phosphate compound represented by a composition formula A_{y}MPO₄ (A is an alkali metal, and M is a transition metal, and 0<y<2, where A_{y}FePO₄ in which M is a single substance of only Fe is excluded). This technology is intended to provide a nonaqueous electrolyte secondary battery that is high in discharge voltage and excellent in charge/discharge characteristic.

However, the positive electrode active material having the foregoing olivine structure is low in the Li-ion diffusibility inside the active material. Furthermore, due to the low Li-ion diffusibility, increased internal resistance of the lithium secondary battery results, so that heightened output cannot be achieved.

CN 1684290 A discloses a positive electrode active material used in secondary Li cells, which is the phosphate material with the olivine structure. As an example, CN 1684290 A discloses Li_{0.99}Na_{0.01}MnPO₄. WO 2008/130093 A1 discloses phosphate materials having the olivine structure as positive electrode active materials. As an example, WO 2008/130093 A1 discloses Li_{0.95} Na_{0.05} MnPO₄.

### SUMMARY OF THE INVENTION

The invention provides a positive electrode active material that has the olivine structure and that is excellent in the Li-ion diffusibility inside the active material, and a lithium secondary battery as well as manufacture methods for the positive electrode active material and the lithium secondary battery.

A positive electrode active material in accordance with a first aspect of the invention has an olivine structure, and is represented by LixM1-xMnPO4 where 0<x≤1, and M is an alkali metal element that is larger in ion radius than Li, and has a construction in which an inter-layer interval of MnO₆ layers in the LixM1-xMnPO₄ being larger than the inter-layer interval of the MnO₆ layers in LiMnP04 as a reference substance by greater than or equal to 0,3 Å.

According to the first aspect of the invention, since the inter-layer interval of the MnO₆ layers in the positive electrode active material is larger than the inter-layer interval of the MnO₆ layers in LiMnPO₄ as the reference substance, a positive electrode active material that is excellent in the Li-ion diffusibility inside the active material can be obtained.

In the positive electrode active material in accordance with the first aspect, the inter-layer interval of the MnO₆ layers in the LiₓM₁₋ₓMnPO₄ is greater than or equal to 0.3 angstrom.

Besides, in the positive electrode active material in accordance with the first aspect, x in the LiₓM₁₋ₓMnPO₄ may satisfy 0.5≤x≤1.

An positive electrode active material in accordance with a second aspect of the invention has an olivine structure; and is represented by LiₓM₁₋ₓMnPO₄ where 0<x<1, and M is an alkali metal element that is larger in ion radius than Li.

Besides, in the positive electrode active material in accordance with the second aspect, x in the LiₓM₁₋ₓMnPO₄ may satisfy 0.5≤x<1.

According to the second aspect of the invention, the positive electrode active material has two kinds of atoms, that is, Li, and M that is larger in the ion radius than Li, at the position of Li, in comparison with a common LiMnPO₄. Therefore, in comparison with the common LiMnPO₄, the Li-ion migration path in the crystal structure can be made broader, and therefore the Li-ion diffusibility can be improved.

Moreover, the inter-layer interval of MnO₆ layers is larger than in the LiMnPO₄ reference substance by greater than or equal to 0,3 Å.

A positive electrode active material in accordance with a third aspect of the invention has an olivine structure, and is obtained by fabricating a positive electrode active material-forming material represented by MMnPO₄ where M is an alkali metal element that is larger in ion radius than Li, and partially or entirely substituting the M constituting the positive electrode active material-forming material into Li.

According to the third aspect of the invention, a positive electrode active material excellent in the Li-ion diffusibility can be obtained.

Besides, in the positive electrode active material in accordance with the third aspect, the M may be one of Na, K, and Rb.

Besides, in the positive electrode active material in accordance with the third aspect, the M may be Na. Since Na has a small difference in ion radius from Li, Na can make the crystal structure more stable.

A positive electrode active material in accordance with a fourth aspect of the invention has: a positive electrode layer containing the positive electrode active material described above; a negative electrode layer containing a negative electrode active material; a separator disposed between the positive electrode layer and the negative electrode layer; and an organic electrolyte that conducts Li-ion between the positive electrode active material and the negative electrode active material.

According to the fourth aspect of the invention, the use of the foregoing positive electrode active material makes it possible to provide a lithium secondary battery that is low in the internal resistance and that allows the output to be enhanced.

A positive electrode active material manufacture method in accordance with a fifth aspect of the invention includes: fabricating a positive electrode active material-forming material having an olivine structure and being represented by MMnPO₄ where M is an alkali metal element that is larger in ion radius than Li; and partially or entirely substituting the M constituting the positive electrode active material-forming material into Li.

Besides, the positive electrode active material manufacture method in accordance with the fifth aspect may further include pulverizing the positive electrode active material-forming material.

Besides, in the positive electrode active material manufacture method in accordance with the fifth aspect, the positive electrode active material-forming material may be pulverized by using a mechanical milling method.

Besides, in the positive electrode active material manufacture method in accordance with the fifth aspect, for substitution into Li, the positive electrode active material-forming material may be added into a Li-containing solution, and the M constituting the positive electrode active material-forming material may be ion-exchanged with Li that is contained in the Li-containing solution.

According to the fifth aspect of the invention, a positive electrode active material excellent in the Li-ion diffusibility can easily be obtained by firstly fabricating a MMnPO₄ whose Li-ion migration path is broader than that of a common LiMnP04, and next partially or entirely substituting the M of MMnPO₄ into Li.

A lithium secondary battery manufacture method in accordance with a sixth aspect of the invention includes forming a positive electrode layer by using the positive electrode active material obtained by the positive electrode active material manufacture method described above.

According to the invention, by using the positive electrode active material obtained by the positive electrode active material manufacture method described above, a lithium secondary battery that is low in the internal resistance and that allows the output to be enhanced can be obtained.

A lithium secondary battery manufacture method in accordance with a seventh aspect of the invention includes: fabricating a positive electrode active material-forming material having an olivine structure and being represented by MMnPO₄ where M is an alkali metal element that is larger in ion radius than Li; forming a positive electrode layer by using the positive electrode active material-forming material; assembling a cell by using at least the positive electrode layer, and an organic electrolyte that contains Li-ion; and partially or entirely substituting the M constituting the positive electrode active material-forming material into Li by performing a charge-discharge treatment on the cell after the cell is assembled.

According to the seventh aspect of the invention, firstly, a positive electrode layer in which MMnPO₄ has been added is formed, and then a cell is assembled by using the positive electrode layer, and finally the M of the MMnPO₄ is partially or entirely substituted into Li by the charge-discharge treatment. By this method, a positive electrode active material excellent in the Li-ion diffusibility is formed in the positive electrode layer. In consequence, a lithium secondary battery that is low in the internal resistance and that allows the output to be enhanced can be obtained.

In the invention, it is possible to obtain a positive electrode active material and a lithium secondary battery that are excellent in the Li-ion diffusibility inside the active material, and manufacture methods therefor.

### BRIEF DESCRIPTION OF THE DRAWINGS

The foregoing and/or further objects, features and advantages of the invention will become more apparent from the following description of preferred embodiment with reference to the accompanying drawings, in which like numerals are used to represent like elements and wherein:
FIG. 1A is an illustrative diagram illustrating an inter-layer interval of MnO₆ layers in LiMnPO₄ as a reference substance;
FIG. 1B is an illustrative diagram illustrating the inter-layer interval of MnO₆ layers in a positive electrode active material in a first embodiment of the invention;
FIG. 2 is a general sectional view showing an example of the lithium secondary battery of the invention;
FIG. 3 is a general sectional view illustrating the situation of MnO₆ layers in the positive electrode active material manufacture method of the invention;
FIG. 4 is a graph showing results of XRD measurement with respect to the NaMnPO₄ in the invention;
FIG 5 is a graph showing results of impedance measurement with respect to coin cells obtained in Example 2 of the invention and Comparative Example 2; and
FIG. 6 is an illustrative diagram illustrating a crystal structure of LiFePO₄ that has a common olivine structure.

### DETAILED DESCRIPTION OF EMBODIMENTS

Hereinafter, the positive electrode active material, the lithium secondary battery, the manufacture method for the positive electrode active material, and the manufacture method for the lithium secondary battery of the invention will be described.

Firstly, the positive electrode active material of the invention will be described. The positive electrode active material of the invention can be broadly divided into three embodiments. They are termed the first embodiment, the second embodiment, and the third embodiment, and will be described separately below.

A positive electrode active material of the first embodiment is characterized by having an olivine structure, and being represented by LiₓM₁₋ₓMnPO₄ (where 0<x≤1, and M is an alkali metal element that is larger in ion radius than Li), and an inter-layer interval of MnO₆ layers being larger than the inter-layer interval of the MnO₆ layers in LiMnPO₄ as a reference substance.

According to the first embodiment, since the inter-layer interval of the MnO₆ layers in the positive electrode active material is larger than the inter-layer interval of the MnO₆ layers in LiMnPO₄, which is the reference substance, the positive electrode active material can be made excellent in the Li-ion diffusibility inside active material. As the Li-ion diffusibility improves, the Li-ion diffusion resistance, which greatly contributes to the internal resistance, can be reduced, so that the internal resistance of the lithium secondary battery can be lowered and therefore the output can be heightened. Incidentally, many positive electrode active materials having a common olivine structure are inferior in the Li-ion diffusibility to the positive electrode active material having a laminar structure. A reason for this is considered to be that in the positive electrode active material having a common olivine structure, the Li-ion migration path is physically narrow. Therefore, in the first embodiment, by making the inter-layer interval of the MnO₆ layers larger than a common inter-layer interval thereof, the Li-ion migration path becomes broader, so that the Li-ion diffusibility improves.

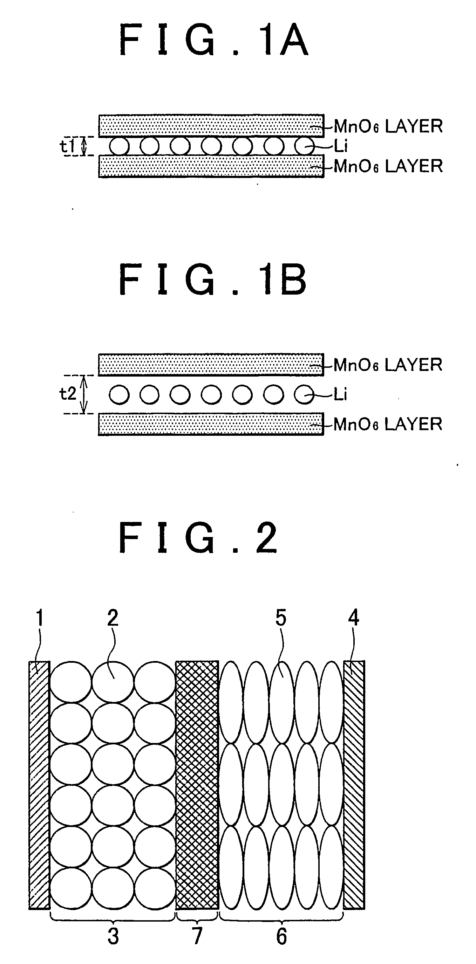

Next, the inter-layer interval of the Mn06 layers in the first embodiment will be described with reference to drawings. FIG 1A and FIG. 1B are illustrative diagrams illustrating a difference between the inter-layer interval of the MnO₆ layers in LiMnPO₄ as a reference substance and the inter-layer interval of the MnO₆ layers in the positive electrode active material of the first embodiment. As shown in FIG 1A, in LiMnPO₄ as the reference substance, the inter-layer interval of the MnO₆ layers is usually determined by the size of Li (inter-layer interval t1). On the other hand, the inter-layer interval (inter-layer interval t2) of the MnO₆ layers in the positive electrode active material of the first embodiment, as shown in FIG 1B, is larger than the inter-layer interval of the MnO₆ layers in LiMnPO₄ as the reference substance. As a result, the positive electrode active material of the first embodiment is excellent in the Li-ion diffusibility inside the active material.

Besides, the positive electrode active material of the first embodiment can be obtained by, for example, firstly fabricating MMnPO₄ that has an olivine structure through the use of an alkali metal element M (e.g., Na) that is larger in ion radius than Li, and then partially or entirely substituting the M contained in the structure, into Li, as in a positive electrode active material manufacture method described below. In this method, since the MMnPO₄ having the olivine structure is firstly fabricated by using an alkali metal element that is larger in ion radius than Li, a positive electrode active material in which the inter-layer interval of the MnO₆ layers is larger than the inter-layer interval of the MnO₆ layers in LiMnPO₄ as the reference substance is formed.

In this case, if the M contained in the MMnPO₄ is entirely substituted into Li, a positive electrode active material having a structure as shown in FIG. 1B that is described above can be obtained. This positive electrode active material has an olivine structure, and is represented by LiMnPO₄, and has a construction in which the inter-layer interval of the MnO₆ layers is larger than the inter-layer interval of the MnO₆ layers in the LiMnPO₄ that is used as the reference substance. On the other hand, if the M contained in the MMnPO₄ is partially substituted into Li, a positive electrode active material in which Li and M are mixed. This positive electrode active material has an olivine structure, and is represented by LiₓM₁₋ₓMnPO₄ (0<x<1), and has a construction in which the inter-layer interval of the MnO₆ layers is larger than the inter-layer interval of the MnO₆ layers in the LiMnPO₄ that is used as the reference substance.

In the first embodiment, Li-ion diffuses the inter-layer spaces (intervals) between the adjacent MnO₆ layers. The inter-layer interval of MnO₆ layers refers to the value of the Mn-Mn interatomic distance measured by the XAFS (X-ray Absorption Fine Structure). Besides, in the first embodiment, it can be confirmed that the inter-layer interval of the MnO₆ layers in the intended positive electrode active material is larger than the inter-layer interval of the MnO₆ layers in the LiMnPO₄ that is used as the reference substance, indirectly by the following method. That is, this can be confirmed by a grating constant that is calculated through the precision measurement by the XRD (X-ray diffraction).

Next, the LiMnPO₄ as the reference substance in the first embodiment will be described. In the first embodiment, the LiMnPO₄ as the reference substance refers to as LiMnP04 that has a crystal state of an olivine structure that is ideal. Concretely, a most energetically stable state is calculated by using a molecular dynamics simulation, and the LiMnPO₄ in the most energetically stable state is determined as the LiMnPO₄ that is used as the reference substance. The inter-layer interval of the MnO₆ layers in the LiMnPO₄ used as the reference substance is 2.6 angstroms.

The inter-layer interval of the MnO₆ layers in the positive electrode active material of the first embodiment is larger than the inter-layer interval of the MnO₆ layers in the LiMnPO₄ used as the reference substance. According to the first embodiment, the inter-layer interval of the MnO₆ layers is larger than that in the reference substance by at least 0.3 angstrom, and preferably, by at least 0.35 angstrom.

Next, the structure of the positive electrode active material of the first embodiment will be described. The positive electrode active material of the first embodiment has an olivine structure, and has a composition of LiₓM₁₋ₓMnPO₄ (where 0<x≤1, and M is an alkali metal element that is larger in ion radius than Li).

In the foregoing composition, it is more preferable that x be greater. This is because a greater value of x means an increased amount of Li that functions as an ion conductor. Although in the foregoing composition, x is greater than 0, x is preferably greater than or equal to 0.5, and more preferably greater than or equal to 0.8. In addition, in the first embodiment, if the inter-layer interval of the MnO₆ layers is larger than the inter-layer interval of the MnO₆ layers in the LiMnPO₄ used as the reference substance, x may be 1.

In the foregoing composition, M is an alkali metal element that is larger in ion radius than Li. Examples of the M include Na, K, Rb, etc. In particular, Na and K are preferable, and Na is particularly preferable. These alkali metal elements, due to their small differences in ion radius from Li, make it possible to obtain a positive electrode active material that has a more stable crystal structure. Besides, since at the time of formation of a crystal structure, the arrangement of atoms follows the Pauling rule, the elements similar in ion radius basically easily exchange their positions. For this reason, too, it is preferable that the M be Na.

The shape of the positive electrode active material of the first embodiment is not particularly limited. Examples of the shape thereof include a granular shape, a platy shape, a needle shape, etc. In particular, the shape of the positive electrode active material is preferably a granular shape. Examples of the granular shape of the positive electrode active material include a spherical shape, an elliptical sphere shape, etc.

It is preferable that the average particle diameter of the positive electrode active material of the first embodiment be, for example, within the range of 1 µm to 50 µm, and in particular within the range of 1 µm to 20 µm, and more particularly within the range of 3 µm to 5 µm. If the average particle diameter of the positive electrode active material is excessively small, there is possibility of the handling characteristic becoming poor. If the average particle diameter thereof is excessively large, it may sometimes become difficult to obtain a flat positive electrode layer. Incidentally, the average particle diameter of the positive electrode active material can be found by, for example, measuring particle diameters of the positive electrode active material observed under a scanning electron microscope (SEM) and then averaging the measured particle diameters.

The use of the positive electrode active material of the first embodiment is not particularly limited as long as the use requires that Li-ion is used as an ion conductor in order to generate an electromotive force. Examples of the use thereof include a lithium secondary battery, and the like. Besides, the positive electrode active material of the first embodiment can be obtained by a manufacture method for a positive electrode active material described below.

Next, the second embodiment of the positive electrode active material of the invention will be described. The positive electrode active material of the second embodiment is characterized by having an olivine structure, and being represented by LiₓM₁₋ₓMnPO₄ (where 0<x<1, and M is an alkali metal element that is larger in ion radius than Li).

According to the second embodiment, the positive electrode active material has two kinds of atoms, that is, Li, and an M that is larger in ion radius than Li, at the position of Li, as compared with a common active material of LiMnPO₄. Therefore, the Li-ion migration path in the crystal structure can be made broad, so that the Li-ion diffusibility can be improved. Incidentally, a positive electrode active material having an olivine structure that has the foregoing composition is not generally known.

Besides, the positive electrode active material of the second embodiment can be obtained by, for example, firstly fabricating MMnPO₄ that has an olivine structure through the use of an alkali metal element M (e.g., Na) that is larger in ion radius than Li, and then partially substituting the M contained in the structure, into Li, as in the positive electrode active material manufacture method described below. In this method, since the MMnPO₄ having the olivine structure is firstly fabricated and then only a portion of the M contained in the structure is substituted into Li, a positive electrode active material having a structure represented by the foregoing general formula is formed.

The positive electrode active material of the second embodiment has an olivine structure, and also has a composition of LiₓM₁₋ₓMnPO₄ (where 0<x<1, and M is an alkali metal element that is larger in ion radius than Li). A preferred range of x is substantially the same as that in the first embodiment, but is different therefrom in that x does not include 1. Preferred kinds of M, and other features and the like are substantially the same as what has described above in conjunction with the first embodiment, and therefore are omitted from the description herein.

In the positive electrode active material of the second embodiment, it is preferable that the inter-layer interval of the MnO₆ layers is larger than the inter-layer interval of the MnO₆ layers in the LiMnPO₄ used as the reference substance. This will provide a positive electrode active material that is even more excellent in the Li-ion diffusibility The inter-layer interval of the MnO₆ layer and the like are substantially the same as what has been described above in conjunction with the first embodiment, and are omitted from the description herein. Furthermore, the shape of the positive electrode active material, the average particle diameter thereof, the use thereof, and the manufacture method therefor according to the second embodiment are also substantially the same as what has described above.

Next, the third embodiment of the positive electrode active material of the invention will be described. A positive electrode active material of the third embodiment is characterized by being obtained by performing a positive electrode active material-forming material fabrication process of fabricating a positive electrode active material-forming material that has an olivine structure, and that is represented by MMnPO₄ (where, M is an alkali metal element that is larger in ion radius than Li), and a substitution process of partially or entirely substituting the M that constitutes the positive electrode active material-forming material into Li.

According to the third embodiment, a positive electrode active material excellent in the Li-ion diffusibility can be obtained by performing the positive electrode active material-forming material fabrication process and the substitution process.

The positive electrode active material-forming material fabrication process and the substitution process in the third embodiment are substantially the same as the content of the positive electrode active material manufacture method described below, and are omitted from the description herein.

Next, the lithium secondary battery of the invention will be described. The lithium secondary battery of the invention is characterized by having a positive electrode layer that contains the foregoing positive electrode active material, a negative electrode layer that contains a negative electrode active material, a separator disposed between the positive electrode layer and the negative electrode layer, and an organic electrolyte that conducts Li-ion between the positive electrode active material and the negative electrode active material.

According to the invention, the use of the foregoing positive electrode active material makes it possible to provide a lithium secondary battery that is low in the internal resistance and that allows the output to be enhanced.

FIG. 2 is a general sectional view showing an embodiment of the lithium secondary battery of the invention. The lithium secondary battery shown in FIG. 2 has a positive electrode current collector 1, a positive electrode layer 3 that contains a positive electrode active material 2, a negative electrode current collector 4, a negative electrode layer 6 that contains a negative electrode active material 5, a separator 7 disposed between the positive electrode layer 3 and the negative electrode layer 6, and an organic electrolyte (not shown) that conducts Li-ion between the positive electrode active material 2 and the negative electrode active material 5. In the invention, the positive electrode active material described above is used as the positive electrode active material 2. Hereinafter, the lithium secondary battery of the invention will be described separately for constructions.

Firstly, the positive electrode layer used in the invention will be described. The positive electrode layer used in the invention contains at least a positive electrode active material. The positive electrode layer may contain a conductive material, a binder, etc., according to the needs.

The positive electrode active material used in the invention is substantially the same as the foregoing positive electrode active material, and is omitted from the description herein. The content of the positive electrode active material in the positive electrode layer is preferably, for example, about 60 wt% to 97 wt%, and more preferably within the range of 75 wt% to 97 wt%, and even more preferably within the range of 90 wt% to 97 wt%.

Examples of the binder include polyvinylidene fluoride (PVDF), polytetrafluoroethylene (PTFE), etc. Examples of the conductive material include carbon blacks, such as acetylene black, Ketjen black, etc., and other conductive materials. Besides, the positive electrode layer is usually formed on the positive electrode current collector. Examples of the material of the positive electrode current collector include aluminum, SUS, nickel, iron, titanium, etc. In particular, aluminum and SUN are preferable.

Next, the negative electrode layer used in the invention will be described. The negative electrode layer used in the invention contains at least a negative electrode active material. The negative electrode layer may also contain a conductive material, a binder, etc., according to the needs.

The negative electrode active material used in the invention is not particularly limited as long as the material is able to store and release Li-ion. Examples of the negative electrode active material include metallic lithium, lithium alloys, metal oxides, metal sulfides, metal nitrides, carbon-based materials such as graphite and the like, and other materials. Besides, the negative electrode active material may be in a powder form, or may also be a thin-film form.

As for the binder and the conductive material for use in the negative electrode layer, those that are substantially the same as the binder and the conductive material for use in the positive electrode layer can be used. Besides, the negative electrode layer is usually formed on the negative electrode current collector. Examples of the material of the negative electrode current collector include copper, stainless steel, nickel, etc.

The organic electrolyte used in the invention has a function of conducting Li-ion between the positive electrode active material and the negative electrode active material. Concrete examples of the organic electrolyte include organic electrolyte solutions, polymer electrolytes, gel electrolytes, etc.

The organic electrolyte solution used in the invention is usually a nonaqueous electrolyte solution that contains a lithium salt and a nonaqueous solvent. The lithium salt is not particularly limited as long as it is a lithium salt that is used in a common lithium secondary battery. Examples of the lithium salt include LiPF₆, LiBF₄, LiN(CF₃SO₂)₂, LiCF₃SO₃, LiC₄F₉SO₃, LiC(CF₃SO₂)₃, LiClO₄, etc.

The nonaqueous solvent is not particularly limited as long as it is capable of dissolving the foregoing lithium salt. Examples of the nonaqueous solvent include propylene carbonate, ethylene carbonate, diethyl carbonate, dimethyl carbonate, ethyl methyl carbonate, 1,2-dimethoxyethane, 1,2-diethoxyethane, acetonitrile, propionitrile, tetrahydrofuran, 2-methyltetrahydrofuran, dioxane, 1,3-dioxolan, nitromethane, N,N-dimethyl formamide, dimethyl sulfoxide, sulfolan, γ-butyrolactone, etc. As for these nonaqueous solvents, only one species of these nonaqueous solvents may be used, or a mixture of two or more species thereof may also be used. Besides, the nonaqueous electrolyte solution used herein may be an ambient temperature molten salt.

The polymer electrolyte contains a lithium salt and a polymer. The lithium salt used herein may be the same as the lithium salt used in the foregoing organic electrolyte solution. The polymer is not particularly limited as long as the polymer forms a complex together with a lithium salt. Examples of the polymer include polyethylene oxide, and the like.

The gel electrolyte contains a lithium salt, a polymer, and a nonaqueous solvent. The lithium salt and the nonaqueous solvent used herein may be the same as the lithium salt and the nonaqueous solvent used in the foregoing organic electrolyte solution. Besides, the polymer is not particularly limited as long as the polymer is able to gelate. Examples of the polymer include polyethylene oxide, polypropylene oxide, polyacrylonitrile, polyvinylidene fluoride (PVDF), polyurethane, polyacrylate, cellulose, etc.

The lithium secondary battery of the invention has a separator that is usually disposed between the positive electrode layer and the negative electrode layer. Examples of the separator include porous membranes made of polyethylene, polypropylene, etc., non-woven fabrics, such as resin non-woven fabrics, glass fiber non-woven fabrics, etc., and other materials.

Examples of the shape of the battery case used in the invention include a cylindrical shape, a square shape, a coin shape, a laminate shape, etc. Besides, the lithium secondary battery of the invention has an electrode body that is constructed of the positive electrode layer, the separator and the negative electrode layer. Examples of the shape of the electrode body include a flat plate type, a rolled type, etc. Besides, the lithium secondary battery of the invention can be fabricated by the same method as a common lithium secondary battery.

Next, the manufacture method for the positive electrode active material of the invention will be described. The positive electrode active material manufacture method of the invention is characterized by having a positive electrode active material-forming material fabrication process of fabricating a positive electrode active material-forming material that has an olivine structure and that is represented by MMnPO₄ (where M is an alkali metal element that is larger in ion radius than Li), and a substitution process of partially or entirely substituting the M that constitutes the positive electrode active material-forming material, into Li.

According to the invention, since an MMnPO₄ having a wider Li-ion migration path than a common LiMnPO₄ is firstly fabricated in the positive electrode active material-forming material fabrication process, and then the M of the MMnPO₄ is partially or entirely substituted into Li in the substitution process, a positive electrode active material excellent in the Li-ion diffusibility can easily be obtained. Besides, in the invention, an MMnPO₄ having a wider Li-ion migration path than a related-art LiMnPO₄ is fabricated in the positive electrode active material-forming material fabrication process. Therefore, a positive electrode active material having an olivine structure and having a construction in which the inter-layer interval of the MnO₆ layers is larger than the inter-layer interval of the MnO₆ layers in the LiMnPO₄ used as the reference substance can be obtained. Besides, in the invention the M of the MMnPO₄, for example, can be partially or entirely substituted into Li in the substitution process. Therefore, a positive electrode active material having an olivine structure and represented by LiₓM₁₋ₓMnPO₄ (where 0<x≤1, and M is an alkali metal element that is larger in ion radius than Li) can be obtained.

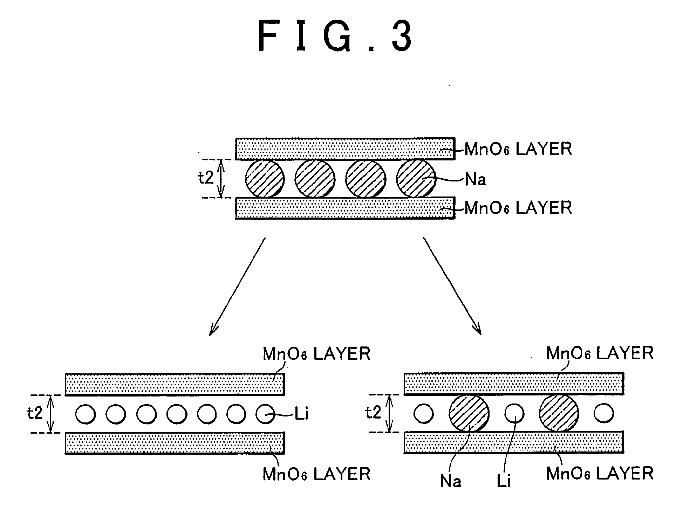

FIG. 3 is a general sectional view illustrating the condition of the situation of the MnO₆ layers in the positive electrode active material manufacture method of the invention. In the invention, firstly, a positive electrode active material-forming material having an olivine structure and represented by MMnPO₄ (where M is an alkali metal element that is larger in ion radius than Li) is fabricated. If the M is, for example, Na (sodium), the inter-layer interval of the MnO₆ layers in the positive electrode active material-forming material is usually determined by the size of Na (inter-layer interval t2).

Next, in the invention, the alkali metal element, for example, Na, constituting the positive electrode active material-forming material is partially or entirely substituted into Li. More concretely, the Na in the MnO₆ layers is partially or entirely substituted into Li. For example, if the Na in the MnO₆ layers is entirely substituted into Li, a positive electrode active material in which only Li exists in the inter-layer space between the MnO₆ layers as shown in a left portion of FIG. 3 is obtained (the composition of the obtained positive electrode active material is LiMnPO₄). On the other hand, if the Na in the MnO₆ layers is partially substituted into Li, a positive electrode active material in which Na and Li exist in the inter-layer space between the MnO₆ layers as shown in a right portion of FIG. 3 is obtained (the composition of the obtained positive electrode active material is LiₓNa₁₋ₓMnPO₄ (0<x<1)). Particularly, Na, which is the most similar to Li in the ion radius, of the alkali metal elements, can make the crystal structure more stable. Hereinafter, the positive electrode active material manufacture method of the invention will be described separately for the processes.

The positive electrode active material-forming material fabrication process in the invention is a process of fabricating a positive electrode active material-forming material that has an olivine structure and that is represented by MMnPO₄ (where M is an alkali metal element that is larger in ion radius than Li). The kinds of M, and the like are the same as what has described above. Particularly, in the invention, it is preferable that the positive electrode active material-forming material be NaMnPO₄.

The method of fabricating the MMnPO₄ having an olivine structure is not particularly limited as long as the method is capable of fabricating a desired phosphate compound. Examples of the method include a sol-gel method, a coprecipitation method, a hydrothermal synthesis method, a solid phase method, etc. In particular, the sol-gel method is preferable.

The sol-gel method is a method in which a sol-gel solution having a desired composition is applied to a baseboard, and after the solvent of the sol-gel solution was removed and fired so as to form a positive electrode active material-forming material. The sol-gel solution used in the sol-gel method usually contains a source of M, a source of Mn and a source of P. Examples of the source of M, for example, in the case where M is Na, include sodium acetate dihydrate (C₂H₃NaO₂●2H₂O), Na₂CO₃, etc. In particular, sodium acetate dihydrate is preferable. Examples of the source of Mn include manganese acetate tetrahydrate (C₄H₆O₄Mn●4H₂O), MnCO₃●H₂O Mn(NO₃)₂, etc. In particular, manganese acetate tetrahydrate is preferable. Examples of the source of P include NH₄H₂PO₄, H₃PO₄, etc. In particular, NH₄H₂PO₄ is preferable. As for the solvent for use in the sol-gel solution, it is preferable to appropriately select a solvent according to the materials, such as the M source, etc. Examples of the solvent include a glycolic acid, and the like.

The ratio of the amounts of the M source, the Mn source and the P source used is usually M source:Mn source:P source=1:1:1 in molar ratio. The firing temperature in the sol-gel reaction is usually within the range of 150°C to 800°C. In particular, it is preferably within the range of 300°C to 600°C. In addition, in the case where the MMnPO₄ having the olivine structure is fabricated by the aforementioned solid phase method, the reaction temperature is usually within the range of 300°C to 700°C.

Incidentally, the composition of the positive electrode active material-forming material obtained in this process can be confirmed by, for example, the X-ray diffraction (XRD).

Next, the substitution process in the invention will be described. The substitution process in the invention is a process of partially or entirely substituting the M constituting the positive electrode active material-forming material, into Li.

The method of partially or entirely substituting the M constituting the positive electrode active material-forming material into Li is not particularly limited as long as the method causes a desired substitution reaction. Examples of the method include an ion exchange method. The ion exchange method is a method in which the positive electrode active material-forming material is added into a Li-containing solution so that ion exchange occurs between the M constituting the positive electrode active material-forming material and the Li contained in the Li-containing solution.

The Li-containing solution usually contains a Li source and a solvent. Examples of the Li source include LiCl, and the like. Besides, examples of the solvent include LiNO₃, and the like. In addition, in the invention, the Li-containing solution used may be an organic electrolyte solution that is used in a lithium secondary battery. Examples of the organic electrolyte solution include a solution substantially the same as the organic electrolyte solution that is used in the lithium secondary battery.

Examples of the method of advancing the ion exchange reaction include methods that utilize heat, methods that utilize a concentration difference, etc. One method that utilizes heat is a method in which a positive electrode active material-forming material is added into a Li-containing solution, and the ion exchange reaction is advanced by heating. The utilization of heat makes it possible to perform a desired ion exchange reaction within a short period of time. The heating temperature is usually within the range of 300°C to 400°C and, in particular, preferably within the range of 330°C to 350°C. The heating time varies depending on the kind of the positive electrode active material-forming material, etc., but is usually within the range of 1 hour to 10 hours and, in particular, preferably within the range of 2 hours to 5 hours. In addition, in the invention, it is preferable to appropriately select the composition of the Li-containing solution, and the like by taking the heat resistance and the like into consideration.

One method that utilizes concentration difference is a method in which the ion exchange reaction is advanced by making the concentration of Li contained in the Li-containing solution sufficiently high. Since there is no need to perform heating, this method has an advantage of allowing selection from a wide range of materials. Besides, the Li concentration of the Li-containing solution is not particularly limited. However, the Li concentration is usually within the range of 1 mol% to 10 mol% and, in particular, preferably within the range of 4 mol% to 6 mol%. The reaction time varies depending on the kind of the positive electrode active material-forming material, etc. However, the reaction is usually within the range of 10 hours to 300 hours and, in particular, preferably within the range of 100 hours to 150 hours. Besides, in the invention, the ion exchange reaction may also be advanced by utilizing both heat and the concentration difference.

In the invention, the ratio between the amount of the positive electrode active material-forming material used and the amount of the Li-containing solution used varies depending on the Li concentration of the Li-containing solution, and the like. However, it is preferable that the amount of the Li-containing solution used relative to 100 g of the positive electrode active material-forming material be, for example, within the range of 0.5 L to 1 L, and more preferably within the range of 0.7 L to 0.8 L. If the ratio therebetween is within the foregoing range, the ion exchange reaction can be efficiently advanced.

In the invention, the M constituting the positive electrode active material-forming material is partially or entirely substituted into Li. It is preferable that the extent to which the ion exchange is performed be appropriately selected according to the kind of the positive electrode active material-forming material and the use of the positive electrode active material intended, etc. Besides, in the invention, stirring may also be performed in order to cause the ion exchange reaction to uniformly occur.

Incidentally, the composition of the positive electrode active material obtained in this process can be confirmed by, for example, the X-ray diffraction (XRD).

In the invention, following the positive electrode active material-forming material fabrication process, a positive electrode active material-forming material pulverization process of pulverizing the obtained positive electrode active material-forming material may also be performed. By performing this process, the substitution process can be more efficiently accomplished. The method of pulverizing the positive electrode active material-forming material is not particularly limited as long as the method is capable of pulverization to a desired size. For example, methods in which mechanical energy is applied are preferable. In particular, a mechanical milling method is preferable. Similarly, a positive electrode active material pulverization process of pulverizing the obtained positive electrode active material may also be performed after the substitution process.

Next, the lithium secondary battery manufacture method of the invention will be described. The lithium secondary battery manufacture method of the invention can be broadly divided into two embodiments. These embodiments are respectively termed the fourth embodiment and the fifth embodiment, and will be separately described below.

The lithium secondary battery manufacture method of the fourth embodiment is characterized by having a positive electrode layer formation process of forming a positive electrode layer by using the positive electrode active material obtained by the foregoing positive electrode active material manufacture method.

According to the fourth embodiment, the use of the positive electrode active material by the positive electrode active material manufacture method makes it possible to obtain a lithium secondary battery that is low in the internal resistance and that allows the output to be enhanced.

The positive electrode layer formation process in the fourth embodiment is a process of forming a positive electrode layer by using the positive electrode active material obtained by the foregoing positive electrode active material manufacture method. Examples of the method of forming the positive electrode layer include a method in which a positive electrode layer-forming paste is applied to the positive electrode current collector, and is dried. Furthermore, the positive electrode layer may also be pressed in order to improve the electrode density. The positive electrode layer-forming paste usually contains a positive electrode active material, a conductive material, a binder, etc. The description of the conductive material, the binder and the like is substantially the same as the description thereof made above in conjunction with the lithium secondary battery. Besides, the method of applying the positive electrode layer-forming paste is not particularly limited, but a common application method may be employed.

The lithium secondary battery manufacture method of the fourth embodiment usually has, besides the positive electrode layer formation process, a negative electrode layer formation process of forming a negative electrode layer, a cell assembly process of assembling a cell, etc. These processes are substantially the same as those in a common lithium secondary battery manufacture method. Usually, the assembly of cells, and the like are performed in an inert gas atmosphere.

Next, the lithium secondary battery manufacture method of the fifth embodiment of the invention will be described. The lithium secondary battery manufacture method of the fifth embodiment is characterized by having: a positive electrode active material-forming material fabrication process of fabricating a positive electrode active material-forming material that has an olivine structure and that is represented by MMnPO₄ (where M is an alkali metal element that is larger in ion radius than Li); a positive electrode layer formation process of forming a positive electrode layer by using the positive electrode active material-forming material; a cell assembly process of assembling a cell by using at least the positive electrode layer, and an organic electrolyte that contains Li-ion; and a charge-discharge treatment process of partially or entirely substituting the M constituting the positive electrode active material-forming material into Li by performing a charge-discharge treatment after the cell assembly process.

According to the fifth embodiment, firstly, the positive electrode layer into which MMnPO₄ has been added is formed, and then a cell is assembled using the positive electrode layer, and finally the M of the MMnPO₄ is partially or entirely substituted into Li by the charge-discharge treatment. By this method, a positive electrode active material excellent in the Li-ion diffusibility is formed in the positive electrode layer. In consequence, a lithium secondary battery that is low in the internal resistance and that allows the output to be enhanced can be obtained. In addition, at the time of the charge-discharge treatment, the M is desorbed from the positive electrode layer-forming material by the charging, and Li is stored into the positive electrode layer-forming material by the discharging. Hereinafter, the lithium secondary battery manufacture method of the fifth embodiment will be described separately for each process.

The positive electrode active material-forming material fabrication process in the fifth embodiment is substantially the same as the foregoing positive electrode active material-forming material fabrication process, and is omitted from the description herein.

The positive electrode layer formation process in the fifth embodiment is substantially the same as the positive electrode layer formation process described above in conjunction with the first embodiment, except that the positive electrode active material-forming material is used instead of the positive electrode active material. Therefore, the description of this process is omitted herein. In addition, as for the positive electrode active material-forming material, substantially the same material as the material described above in conjunction with the positive electrode active material manufacture method can be used.

The cell assembly process in the fifth embodiment is a process of assembling a cell by using at least the positive electrode layer, and an organic electrolyte that contains Li-ion. The cell assembly process is substantially the same as the cell assembly process in a common manufacture method for a lithium secondary battery.

The charge-discharge treatment process in the fifth embodiment is a process of partially or entirely substituting the M constituting the positive electrode active material-forming material into Li by performing the charge-discharge treatment after the cell assembly process. In the fifth embodiment, it is preferable to partially substitute the M constituting the positive electrode active material-forming material into Li.

The charging-discharging condition is not particularly limited as long as the condition causes a desired Li exchange reaction to occur. However, it is preferable that the condition include a low rate of 1/20 C or lower, a charge limit of 4.8 V, and a discharge limit of 2.0 V. The number of times of performing the charge-discharge treatment is not particularly limited; however, it is preferable that the number of times of performing the charge-discharge treatment be within the range of 1 to 10 cycles and, in particular, within the range of 1 to 3 cycles.

Besides, the invention is not limited to the foregoing embodiments. The foregoing embodiments are merely illustrative, and the technical scope of the invention encompasses any technology or the like that has substantially the same construction and achieves substantially the same operation and effects as the technical idea that is described in the appended claims for patent of the invention.

The invention will be more concretely described with reference to examples. In Example 1, NaMnPO₄ was fabricated as a positive electrode active material-forming material by the sol-gel method. First, a paste was fabricated by adding 15 parts by weight of sodium acetate dihydrate (C₂H₃NaO₂●2H₂O, by Nacalai Tesque) as a Na source, 31 parts by weight of manganese acetate tetrahydrate (C₄H₆O₄Mn●4H₂O, by Nacalai Tesque) as a Mn source, and 15 parts by weight of NH₄H₂PO₄ (by Nacalai Tesque) as a P source, and 39 parts by weight of glycol acid (C₂H₄O₃, by Aldrich) as a solvent. This paste was prepared so that Na:Mn:P=1:1:1 in molar ratio was achieved. Next, 50 g of this paste was dissolved in 0.5 L of distilled water. After that, the obtained solution was dried, and was fired in the condition of 600°C, so that NaMnPO₄ was obtained.

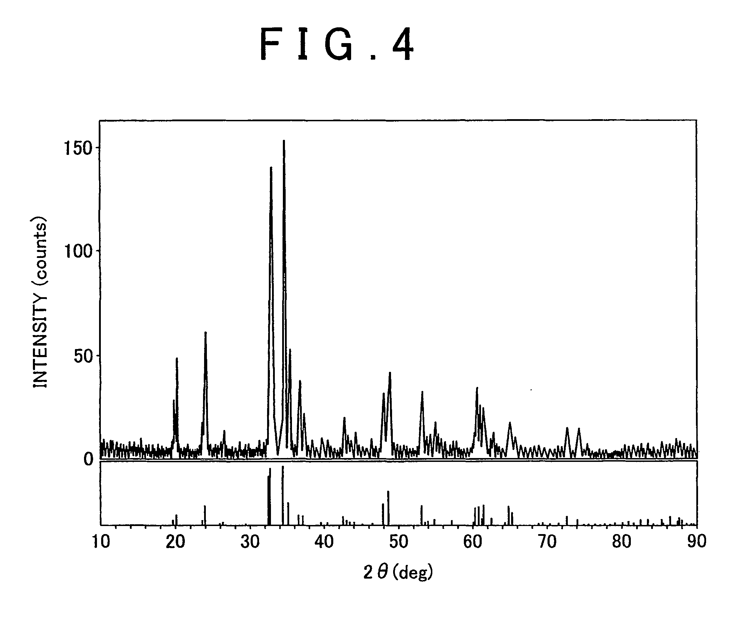

The XRD measurement was performed on the obtained NaMnPO₄, whereby it was confirmed that a desired crystal had been fabricated as shown in FIG. 4. Furthermore, since no peak of an impurity was recognized, it was confirmed that the obtained NaMnPO₄ was a single-layer NaMnPO₄.

In Comparative Example 1, LiMnPO₄ as a positive electrode active material was fabricated by the sol-gel method. Firstly, a paste was fabricated by adding 13 parts by weight of sodium acetate dihydrate (C2H₃ LiO₂●2H₂O; by Nacalai Tesque) as a Li source, 31 parts by weight of manganese acetate tetrahydrate (C₄H₆O₄Mn●4H₂O, by Nacalai Tesque) as a Mn source, 15 parts by weight of NH₄H₂PO₄ (by Nacalai Tesque) as a P source, and 31 parts by weight of glycolic acid (C₂H₄O₃, by Aldrich) as a solvent. This paste was prepared so that Li:Mn:P=1:1:1 in molar ratio was achieved. Next, 50 g of this paste was dissolved in 0.5 L of distilled water. After that, the obtained solution was dried, and was fired in the condition of 600°C, so that LiMnPO₄ was obtained.

The XRD measurement was performed on the obtained LiMnPO₄, whereby it was confirmed that a desired crystal had been fabricated.

In Example 2, coin cells were fabricated by using the positive electrode active material obtained in Example 1. The procedure of the fabrication will be shown below.

A paste was fabricated by introducing 85 g of the positive electrode active material obtained in Example 1 (a powder obtained after a ball mill treatment) and 10 g of carbon black as a conductive material into 125 mL of n-methyl pyrrolidone solution as a solvent in which 5 g of polyvinylidene fluoride (PVDF) as a binder had been dissolved, and then kneading the mixture until it was homogeneously mixed. This paste was applied to one side of an Al current collector of 15 µm in thickness so that a total weight of active material, carbon black and PVDF is 6 mg/cm², and then the drying was performed, so that an electrode was obtained. After that, this electrode was pressed to a paste thickness of 45 µm and a paste density of 2.4 g/cm³. Finally, this electrode was cut out into a size of φ16 mm, so that a positive electrode was obtained.

A paste was fabricated by introducing 92.5 g of a graphite powder that was a negative electrode active material into 125 mL of n-methyl pyrrolidone solution as a solvent in which 7.5 g of polyvinylidene fluoride (PVDF) as a binder had been dissolved, and then kneading the mixture until it was homogeneously mixed. This paste was applied to one side of a Cu current collector of 15 µm in thickness so that a total weight of active material, carbon black and PVDF is 4 mg/cm², and the drying was performed, so that an electrode was obtained. This electrode was pressed to a paste thickness of 20 µm and a density of 1.2 g/cm³. Finally, this electrode was cut out into a size of φ19 mm, so that a negative electrode was obtained.

CR2032-type coin cells were manufactured by using the positive electrode and the negative electrode obtained as described above. Incidentally, the separator used was a PP-made porous separator, and the electrolyte solution used was a solution obtained by dissolving lithium hexafluorophosphate (LiPF₆) as a supporting electrolyte to a concentration of 1 mol/L in a mixture as an electrolytic solution obtained by mixing EC (ethylene carbonate) and DMC (dimethyl carbonate) at a ratio of 3:7 by volume. Next, the charge-discharge treatment was performed on the coin cell after the battery was assembled, whereby the Na constituting the positive electrode active material-forming material was substituted into Li. The condition of the charge-discharge treatment was a charge limit of 4.8 V (1/20 C) and a discharge limit of 2.0 V (1/20 C), and the number of cycles of the charge-discharge treatment performed was 1.

In Comparative Example 2, coin cells were obtained in substantially the same manner as in Example 2, except that the positive electrode active material obtained in Comparative Example 1 was used.

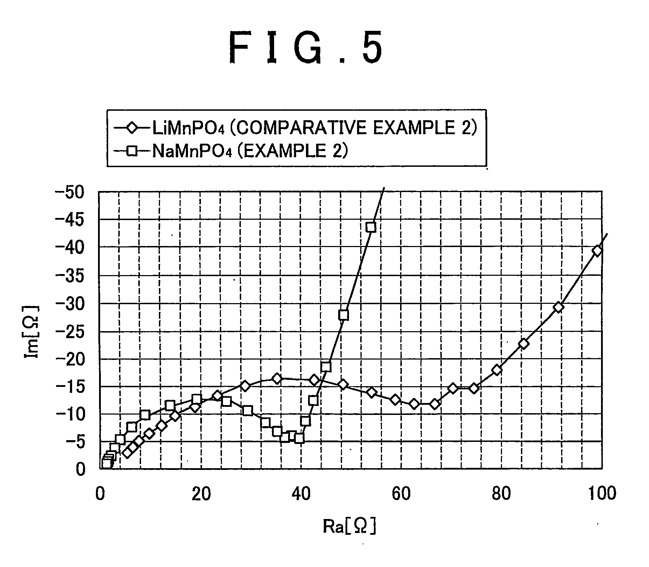

For evaluation, impedance measurement was performed by using the coin cells obtained in Example 2 and Comparative Example 2. The measurement condition was 25°C, a frequency range of 10 mHz to 100 kHz. Results thereof are shown in FIG. 5. Besides, from the obtained results of the impedance measurement, reaction resistance was calculated. The reaction resistance was found from the diameter of a semicircle measured by an AC impedance method. Results of the reaction resistance calculation are shown in Table 1.

**Table 1**

| | Positive electrode active material | Reaction resistance (Ω) |
|---|---|---|
| Example 2 | Obtained by substituting Na of NaMnPO₄ into Li by charge-discharge treatment | 30 |
| Comparative Example 2 | LiMnPO₄ | 70 |

As is apparent from Table 1, it was confirmed that Example 2 exhibited a considerable reduction of the reaction resistance, in comparison with Comparative Example 2. This is considered to be because the inter-layer interval of the MnO₆ layers in the positive electrode active material of Example 2 expanded so that the Li-ion diffusibility inside the active material improved and Li was smoothly inserted and desorbed.

## Claims

1. A positive electrode active material (2), wherein
the positive electrode active material (2) has an olivine structure;
the positive electrode active material (2) is represented by LiₓM₁₋ₓMnPO₄ where 0<x≤1, and M is an alkali metal element that is larger in ion radius than Li; **characterised in that**
an inter-layer interval of MnO₆ layers in the LiₓM₁₋ₓMnPO₄ is larger than the inter-layer interval of the MnO₆ layers in LiMnPO₄ as a reference substance by greater than or equal to 0.3 Å.

2. The positive electrode active material (2) according to claim 1, wherein the inter-layer interval of the MnO₆ layers in the LiₓM₁₋ₓMnPO₄ is larger than in LiMnPO₄ as a reference substance by greater than or equal to 0.35 Å.

3. The positive electrode active material (2) according to claim 1 or 2, wherein x in the LiₓM₁₋ₓMnPO₄ satisfies 0<x<1.

4. The positive electrode active material (2) according to any of claims 1 to 3, wherein x in the LiₓM₁₋ₓMnPO₄ satisfies 0.5≤x.

5. A positive electrode active material (2), wherein
the positive electrode active material (2) has an olivine structure; **characterised in that**
the positive electrode active material (2) is obtained by fabricating a positive electrode active material-forming material represented by MMnPO₄ where M is an alkali metal element that is larger in ion radius than Li, and partially or entirely substituting the M constituting the positive electrode active material-forming material into Li.

6. The positive electrode active material (2) according to any one of claims 1 to 5, wherein the M is one of Na, K, and Rb.

7. The positive electrode active material (2) according to any one of claims 1 to 6, wherein the M is Na.

8. A lithium secondary battery comprising:
a positive electrode layer (3) containing the positive electrode active material (2) according to any one of claims 1 to 7;
a negative electrode layer (6) containing a negative electrode active material (5);
a separator (7) disposed between the positive electrode layer (3) and the negative electrode layer (6); and
an organic electrolyte that conducts Li-ion between the positive electrode active material (2) and the negative electrode active material (5).

9. A positive electrode active material manufacture method comprising:
fabricating a positive electrode active material-forming material having an olivine structure and being represented by MMnPO₄ where M is an alkali metal element that is larger in ion radius than Li; and
partially or entirely substituting the M constituting the positive electrode active material-forming material into Li.

10. The positive electrode active material manufacture method according to claim 9, further comprising pulverizing the positive electrode active material-forming material.

11. The positive electrode active material manufacture method according to claim 10, wherein the positive electrode active material-forming material is pulverized by using a mechanical milling method.

12. The positive electrode active material manufacture method according to any one of claims 9 to 11, wherein for substitution into Li, the positive electrode active material-forming material is added into a Li-containing solution, and the M constituting the positive electrode active material-forming material is ion-exchanged with Li that is contained in the Li-containing solution.

13. A lithium secondary battery manufacture method comprising forming a positive electrode layer (3) by using the positive electrode active material (2) obtained by the positive electrode active material manufacture method according to any one of claims 9 to 12.

14. A lithium secondary battery manufacture method comprising:
fabricating a positive electrode active material-forming material having an olivine structure and being represented by MMnPO₄ where M is an alkali metal element that is larger in ion,radius than Li;
forming a positive electrode layer (3) by using the positive electrode active material-forming material;
assembling a cell by using at least the positive electrode layer (3), and an organic electrolyte that contains Li-ion; and
partially or entirely substituting the M constituting the positive electrode active material-forming material into Li by performing a charge-discharge treatment on the cell after the cell is assembled.

## Patentansprüche

1. Positivelektroden-Aktivmaterial (2), wobei
das Positivelektroden-Aktivmaterial (2) eine Olivinstruktur aufweist;
das Positivelektroden-Aktivmaterial (2) durch LiₓM₁₋ₓMnPO₄ dargestellt ist, wo 0<x≤1, und M ein Alkalimetallelement ist, das im Ionenradius größer als Li ist; **dadurch gekennzeichnet, dass**
ein Zwischenschichtintervall von MnO₆ Schichten in dem LiₓM₁₋ₓMnPO₄ um mehr als oder gleich 0,3 Å größer ist als das Zwischenschichtintervall der MnO₆ Schichten in LiMnPO₄ als einer Referenzsubstanz.

2. Positivelektroden-Aktivmaterial (2) nach Anspruch 1, wobei das Zwischenschichtintervall der MnO₆ Schichten in dem LiₓM₁₋ₓMnPO₄ um mehr als oder gleich 0,35 Å größer ist als in LiMnPO₄ als einer Referenzsubstanz.

3. Positivelektroden-Aktivmaterial (2) nach Anspruch 1 oder 2, wobei x in dem LiₓM₁₋ₓMnPO₄ 0<x<1 erfüllt.

4. Positivelektroden-Aktivmaterial (2) nach einem der Ansprüche 1 bis 3, wobei x in dem LiₓM₁₋ₓMnPO₄ 0,5≤x erfüllt.

5. Positivelektroden-Aktivmaterial (2), wobei
das Positivelektroden-Aktivmaterial (2) eine Olivinstruktur aufweist; **dadurch gekennzeichnet, dass**
das Positivelektroden-Aktivmaterial (2) erhalten ist, durch Fabrikation eines Positivelektroden-Aktivmaterial-bildenden Materials, das durch MMnPO₄ dargestellt ist, wo M ein Alkalimetallelement ist, das im Ionenradius größer als Li ist, und teilweises oder gesamtes Substituieren des M, das das Positivelektroden-Aktivmaterial-bildende Material konstituiert, durch Li.

6. Positivelektroden-Aktivmaterial (2) nach einem der Ansprüche 1 bis 5, wobei das M eines aus Na, K und Rb ist.

7. Positivelektroden-Aktivmaterial (2) nach einem der Ansprüche 1 bis 6, wobei das M Na ist.

8. Lithiumsekundärbatterie, die umfasst:
eine positive Elektrodenschicht (3), die das Positivelektroden-Aktivmaterial (2) nach einem der Ansprüche 1 bis 7 enthält;
eine negative Elektrodenschicht (6), die ein Negativelektroden-Aktivmaterial (5) enthält;
einen Separator (7), der zwischen der positiven Elektrodenschicht (3) und der negativen Elektrodenschicht (6) angeordnet ist; und
einen organischen Elektrolyten, der Li-Ionen zwischen dem Positivelektroden-Aktivmaterial (2) und dem Negativelektroden-Aktivmaterial (5) leitet.

9. Herstellungsverfahren für ein Positivelektroden-Aktivmaterial, das umfasst:
Fabrikation eines Positivelektroden-Aktivmaterial-bildenden Materials mit einer Olivinstruktur und das durch MMnPO₄ dargestellt ist, wo M ein Alkalimetallelement ist, das im Ionenradius größer als Li ist; und
teilweises oder gesamtes Substituieren des M, das das Positivelektroden-Aktivmaterial-bildende Material konstituiert, durch Li.

10. Herstellungsverfahren für das Positivelektroden-Aktivmaterial nach Anspruch 9, das ferner das Pulverisieren des Positivelektroden-Aktivmaterial-bildenden Materials umfasst.

11. Herstellungsverfahren für das Positivelektroden-Aktivmaterial nach Anspruch 10, wobei das Positivelektroden-Aktivmaterial-bildende Material unter Verwendung eines mechanischen Mahlverfahrens pulverisiert wird.

12. Herstellungsverfahren für das Positivelektroden-Aktivmaterial nach einem der Ansprüche 9 bis 11, wobei das Positivelektroden-Aktivmaterial-bildende Material zum Substituieren durch Li in eine Lienthaltende Lösung hinzugegeben wird, und das M, das das Positivelektroden-Aktivmaterial-bildende Material konstituiert, mit Li Ionen-ausgetauscht wird, das in der Li-enthaltenden Lösung enthalten ist.

13. Herstellungsverfahren für eine Lithiumsekundärbatterie, das das Bilden einer positiven Elektrodenschicht (3) unter Verwendung des Positivelektroden-Aktivmaterials (2) umfasst, das durch das Herstellungsverfahren für das Positivelektroden-Aktivmaterial nach einem der Ansprüche 9 bis 12 erhalten ist.

14. Herstellungsverfahren für eine Lithiumsekundärbatterie, das umfasst:
Fabrikation eines Positivelektroden-Aktivmaterial-bildenden Materials mit einer Olivinstruktur und das durch MMnPO₄ dargestellt ist, wo M ein Alkalimetallelement ist, das im Ionenradius größer als Li ist;
Bilden einer positiven Elektrodenschicht (3) unter Verwendung des Positivelektroden-Aktivmaterial-bildenden Materials;
Zusammensetzen einer Zelle unter Verwendung zumindest der positiven Elektrodenschicht (3) und eines organischen Elektrolyten, der Li-Ionen enthält; und
teilweises oder sämtliches Substituieren des M, das das Positivelektroden-Aktivmaterial-bildende Material konstituiert, durch Li, durch Durchführen einer Lade-Entlade Behandlung der Zelle, nachdem die Zelle zusammengesetzt ist.

## Revendications

1. Matériau actif (2) pour électrode positive, dans lequel
le matériau actif (2) pour électrode positive a une structure olivine ;
le matériau actif (2) pour électrode positive est représenté par le composé LiₓM₁₋ₓMnPO₄ où 0<x≤1, et M est un élément métallique alcalin dont le rayon ionique est plus grand que celui de Li; **caractérisé en ce que**
un intervalle inter-couche de couches MnO₆ dans le composé LiₓM₁₋ₓMnPO₄ est plus grand que l'intervalle inter-couche des couches MnO₆ dans le composé LiMnPO₄ comme substance de référence par 0,3Å ou plus.

2. Matériau actif (2) pour électrode positive selon la revendication 1, dans lequel l'intervalle inter-couche des couches MnO₆ dans le composé LiₓM₁₋ₓMnPO₄ est plus grand que dans le composé LiMnPO₄ comme substance de référence par 0,35Å ou plus.

3. Matériau actif (2) pour électrode positive selon la revendication 1 ou 2, dans lequel x dans le composé LixM₁₋ₓ MnPO₄ satisfait 0<x<1.

4. Matériau actif (2) pour électrode positive selon l'une des revendications 1 à 3, dans lequel x dans le composé LiₓM₁₋ₓMnPO₄ satisfait 0,5≤x.

5. Matériau actif (2) pour électrode positive, dans lequel
le matériel actif (2) pour électrode positive a une structure olivine ; **caractérisé en ce que**
le matériau actif (2) pour électrode positive est obtenu en fabriquant un matériau formant un matériau actif pour électrode positive représenté par le composé MMnPO₄ où M est un élément métallique alcalin dont le rayon ionique est plus grand que celui de Li, et en substituant partiellement ou entièrement M composant le matériau formant un matériau actif pour électrode positive par du Li.

6. Matériau actif (2) pour électrode positive selon l'une quelconque des revendications 1 à 5, dans lequel M est l'un parmi Na, K et Rb.

7. Matériau actif (2) pour électrode positive selon l'une quelconque des revendications 1 à 6, dans lequel M est du Na.

8. Batterie rechargeable au lithium comprenant :
une couche d'électrode positive (3) contenant le matériau actif (2) pour électrode positive selon l'une quelconque des revendications 1 à 7 ;
une couche d'électrode négative (6) contenant un matériau actif (5) pour électrode négative;
un séparateur (7) disposé entre la couche d'électrode positive (3) et la couche d'électrode négative (6) ; et
un électrolyte organique qui conduit du Li-ion entre le matériau actif (2) pour électrode positive et le matériau actif (5) pour électrode négative.

9. Procédé de fabrication d'un matériau actif pour électrode positive comprenant le fait :
de fabriquer un matériau formant un matériau actif pour électrode positive ayant une structure olivine et étant représenté par le composé MMnPO₄ où M est un élément métallique alcalin dont le rayon ionique est plus grand que celui de Li ; et
de substituer partiellement ou entièrement le M composant le matériau formant un matériau actif pour électrode positive par du Li.

10. Procédé de fabrication d'un matériau actif pour électrode positive selon la revendication 9, comprenant en outre la pulvérisation du matériau formant un matériau actif pour électrode positive.

11. Procédé fabrication d'un matériau formant un matériau actif pour électrode positive selon la revendication 10, dans lequel le matériau formant un matériau actif pour électrode positive est pulvérisé en utilisant un procédé de broyage mécanique.

12. Procédé de fabrication d'un matériau actif pour électrode positive selon l'une quelconque des revendications 9 à 11, dans lequel pour la substitution par Li, le matériau formant un matériau actif pour électrode positive est ajouté dans une solution contenant du Li, et M composant le matériau formant un matériau actif pour électrode positive subit un échange ionique avec le Li qui est contenu dans la solution contenant du Li.

13. Procédé de fabrication d'une batterie rechargeable au lithium comprenant la formation d'une couche d'électrode positive (3) en utilisant le matériel actif (2) pour électrode positive obtenu par le procédé de fabrication de matériau actif pour électrode positive selon l'une quelconque des revendications 9 à 12.

14. Procédé de fabrication d'une batterie rechargeable au lithium comprenant le fait :
de fabriquer un matériau formant un matériau actif pour électrode positive ayant une structure olivine et étant représenté par le composé MMnPO₄, où M est un élément métallique alcalin dont le rayon ionique est plus grand que celui de Li ;
de former une couche d'électrode positive (3) en utilisant le matériau formant un matériau actif pour électrode positive ;
de monter une pile en utilisant au moins la couche d'électrode positive (3), et un électrolyte organique qui contient du Li-ion ; et
de substituer partiellement ou entièrement M constituant le matériau formant un matériau actif pour électrode positive par Li en effectuant un traitement de charge-décharge sur la pile après montage de la pile.
